# EUROPEAN PATENT SPECIFICATION

(11) **EP 0 798 632 B1**
(45) Date of publication and mention of the grant of the patent: **11.09.2002**
(21) Application number: 97301124.0
(22) Date of filing: 21.02.1997
(51) Int. Cl.: G06F 9/38, G06F 12/08

(54) **Branch prediction method in a multi-level cache system**
Verfahren zur Sprungvorhersage in einem mehrstufigen Cachespeichersystem
Procédé de prediction de branchement dans un système d'antémémoires à plusieurs niveaux

(30) Priority: 25.03.1996 US 621418
(43) Date of publication of application: 01.10.1997
(73) Proprietor: SUN MICROSYSTEMS, INC., Mountain View, CA 94043 (US)
(72) Inventor: Yung, Robert, Fremont, California 94555 (US)
(74) Representative: Hogg, Jeffery Keith

(56) References cited:
- EP-A- 0 318 778
- US-A- 4 679 141
- US-A- 5 163 140
- US-A- 5 423 011
- IBM TECHNICAL DISCLOSURE BULLETIN, vol. 27, no. 5, October 1984, pages 3001-3002, XP002036590 LIU ET AL.: "History Overflow Mechanism"

## Description

### BACKGROUND OF THE INVENTION

The present invention relates to branch prediction information in a cache memory, and in particular to multilevel cache structures.

Cache memories have been used to increase the speed of microprocessors. In a typical configuration, a first level cache is included in the microprocessor chip itself. If the needed instruction or data is not in this cache, access is then made to a second cache, which is typically external and made with SRAM chips which are faster than the normal DRAM used in main memory. If the information is not found in the second level cache, then an access to main memory is required. The caches may be a unified cache structure including both instructions and data, or separate caches for instructions and data may be used. Typically, set-associative caches are used for the first level cache, while direct-mapped caches are typically used, because of bandwidth and wire limitations, for the second level cache. Each cache has tags indicating the address of its associated data or instruction. The tags are compared to the current address to determine if there is a hit or miss in the cache.

Branch instructions will slow down a microprocessor because time is needed to determine whether the branch is taken or not, and to calculate the branch address and then fetch the instruction at that branch address. Modern microprocessors typically employ branch history data to predict whether a branch is taken or not. Execution then continues assuming that the prediction information is correct, and if it is later determined to be incorrect, the improperly fetched instruction is flushed and the new, correct instruction is fetched. In one implementation, such as used in Intel's PENTIUM™, a separate cache referred to as a branch target buffer is used. One such branch target cache is shown in Nexgen's U.S. Patent No. 5,093,778. A branch instruction address is used to tag, with a target address being stored along with the branch target instruction sequence. Also included are branch history bits used for the branch prediction. Such a branch target cache or a buffer improves processing speed, but still adds a latency required to locate the target address and its associated instructions.

A cache structure which includes the branch prediction information along with the predicted target address in the same cache line as the cache entry for the branch instruction is disclosed in my copending application EP - A - 586 057 entitled "Rapid Instruction (Pre) Fetching and Dispatching Using Prior (Pre) Fetch Predicted Annotations", and incorporated in its entirety by reference herein. As set forth in that application, each instruction is partially decoded before being loaded into the first level cache. A class field indicates the type of instruction, including whether it is a branch instruction. If it is a branch instruction, a separate field includes the branch prediction information, followed by a field with the predicted next fetch address. Upon later access, if a particular entry is fetched, the stored predicted next fetch address is used directly to fetch the next instruction, whether it is a branch or not. Any latency on the next fetch is eliminated, unless the next fetch address was mispredicted (including, for a branch, the latency for comparing to an address in a separate branch prediction buffer).

One limitation of such a branch prediction method is that cache memory contents are overwritten according to some algorithm, such as a least recently used (LRU) algorithm, when new instructions are fetched from a lower level cache or main memory. This will occur quite frequently, for instance, in a multi-threading application in which there is a switching back and forth between different programs. During such a program switch, referred to as a context switch, new instructions may be used and overwrite existing instructions in the cache, along with their branch prediction information. Thus, the branch prediction information must be reinitialized to some default prediction for such a new entry, reducing the accuracy of branch prediction.

US-A-5423011 discloses a computer system having first and second cache memories in which the first cache stores data in a plurality of entries together with branch prediction information, and in which the second cache memory saves branch prediction information from a first cache entry when this is overwritten by a new entry. This US patent refers to EP-A-0509245 which discloses the use of a cache to save branch prediction information.

### SUMMARY OF THE INVENTION

The present invention provides a method for maintaining branch prediction information when a cache line is victimized (overwritten). According to the present invention, when a cache line is victimized, the branch prediction information associated with the overwritten cache entry is stored in a next level cache. The invention can be applied to any level cache, with the next level cache being a second, third or Nth level cache.

The present invention can be applied to a microprocessor using a separate instruction cache and branch target cache, as well as to a structure which combines into a single cache the instruction cache and branch target cache. The next level cache may have separate tag and instruction memory chips, or may be combined in a single structure. Preferably, the branch prediction information is stored with the tag in the external cache.

The present invention thus facilitates multi-threading applications and rapid context switches by providing a mechanism for restoring the branch prediction information upon a cache fill or context switch, thereby eliminating any additional latency for branch prediction in connection with a context switch. The branch prediction information is saved to the next level cache during a spare bus cycle in the reading of the cache entry which is overwriting the victimized cache line. Thus, no additional bus cycles are required.

For a fuller understanding of the nature and advantages of the present invention, reference should be made to the following description taken in conjunction with the accompanying drawings.

### BRIEF DESCRIPTION OF THE DRAWINGS

Fig. 1 is a block diagram of a microprocessor which can incorporate the present invention;
Fig. 2 is a diagram of an L1 cache entry used with one embodiment of the present invention;
Fig. 3 is a diagram of an L2 cache entry according to the present invention;
Fig. 4 is a block diagram of the bus structure for an external cache used in conjunction with the present invention;
Fig. 5 is a block diagram of the writeback circuitry used by the present invention; and
Fig. 6 is a timing diagram illustrating the use of a spare cycle for writing to the L2 cache according to the present invention.

### DETAILED DESCRIPTION OF THE PREFERRED EMBODIMENTS

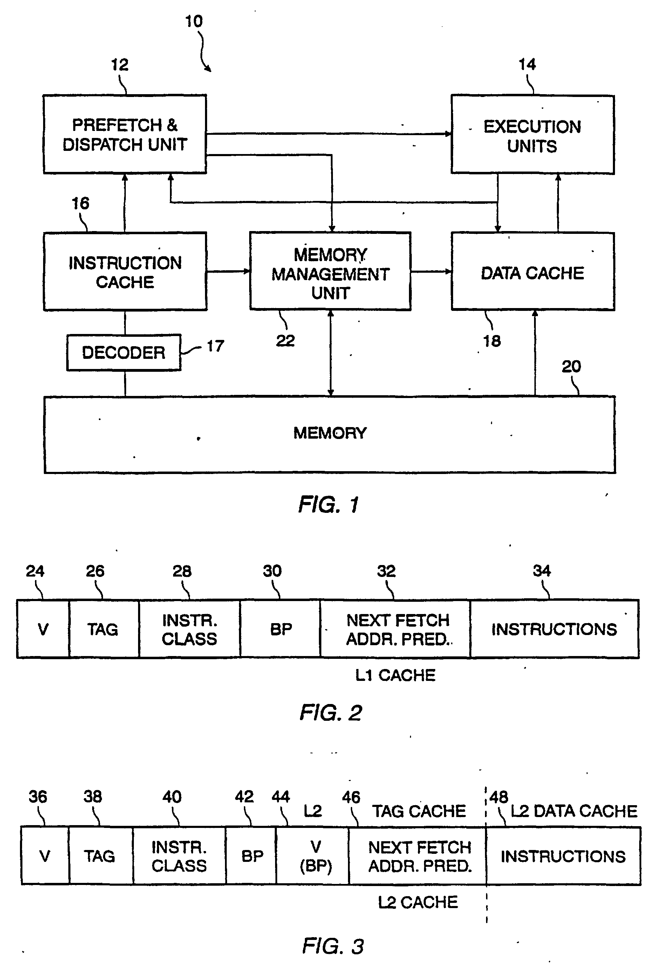

Referring to Fig. 1, a functional block diagram illustrating one embodiment of a computer system into which the present invention can be incorporated is shown. The computer system 10 includes an instruction prefetch and dispatch unit 12, execution units 14, an instruction cache 16, an instruction decoder 17, a data cache 18, a memory unit 20 and a memory management unit 22. The instruction cache 16 and data cache 18 are coupled to the instruction prefetch and dispatch unit 12, the execution units 14, and the memory management unit 22 respectively. The prefetch and dispatch unit 12 is coupled to the execution units 14 and the memory management unit 22. The data cache 18 is coupled to memory 20. The instruction cache 16 is coupled to memory 20 through decoder 17.

Cooperatively, the memory management unit 22 and the prefetch and dispatch unit 12 fetch instructions from instruction cache 16 and data from the data cache 18 respectively and dispatch them as needed to the execution units 14. The results of the executed instructions are then stored in the data cache 18 or main memory 20. Except for the instruction prefetch and dispatch unit 12, the instruction cache 16, and the decoder 17, the other elements, 14 and 18 through 22, are intended to represent a broad category of these elements found in most computer systems. The components and the basic functions of these elements 14, and 18 through 22 are well known and will not be described further. It will be appreciated that the present invention may be practiced with other computer systems having different architectures. In particular, the present invention may be practiced with a computer system having no memory management unit 22. Furthermore, the present invention may be practiced with a unified instruction/data cache or an instruction cache only.

Decoder 17 is used to partially decode the instructions to determine the class of instructions before inserting them into the instruction cache. For purposes of the present invention, the class field needs to minimally indicate whether the instruction is a branch or not. Alternately, additional information could be provided in the class field, such as whether it is a program counter (PC) relative branch, a register indirect branch, a memory access, or an arithmetic or floating point operation.

Fig. 2 illustrates the different fields of the L1 cache according to the present invention. A valid bit field 24 indicates whether the cache entry is valid or not. A tag field 26 has the address tag used for the entry. Instruction class field 28 indicates the partially decoded class for the instruction, in particular whether it is a branch or not. A branch prediction field 30 stores branch prediction bits indicating whether the branch is predicted taken or not. A next fetch address prediction field 32 stores the address of the predicted next instruction, which can either be a sequential instruction if the branch is predicted not taken, or the target address of the branch instruction if the branch is predicted taken. Finally, a field 34 stores the instructions themselves. When a cache line is victimized, upon a context switch, address conflict, or otherwise, the cache entry will be lost, along with its branch prediction information. According to the present invention, this information is then stored in the L2 cache.

Fig. 3 illustrates the fields of an L2 cache entry according to the present invention. A valid bit field 36 indicates whether the cache entry is valid. A field 38 stores the tag, and a field 40 stores the instruction class. The branch prediction information is stored in field 42, and a valid bit for the branch prediction information, if needed, can be stored in a field 44. The next fetch address predicted is stored in field 46, while the instructions themselves are stored in field 48. More than one of fields 42, 44 and 46 may be present, since an L2 cache block may contain several L1 cache blocks.

Branch prediction valid bit 44, if present, can be used to indicate whether the branch prediction information is valid or not. For instance, if the data in the first level cache is updated, the second level cache information may no longer be valid. When the second level cache entry is saved upon being victimized in the first level cache, the valid bit is set to valid. The valid bit indication of valid branch prediction information can be used to override a normal default setting for the branch prediction information upon bringing a cache line into the L1 cache, or writing it into the L2 cache.

The second level cache may also store the partially decoded instruction class, thus eliminating the need to redecode this upon writing this information back into the first level cache on the microprocessor. This is particularly important for a context switch in a multi-threaded application, where the same instruction may bounce back and forth between the L1 and L2 cache with some frequency. The predecode of the class is required only once, improving upon the latency during a context switch. Thus, the present invention provides the dual benefits of not needing to recalculate the branch prediction information and not needing to redetermine the instruction class.

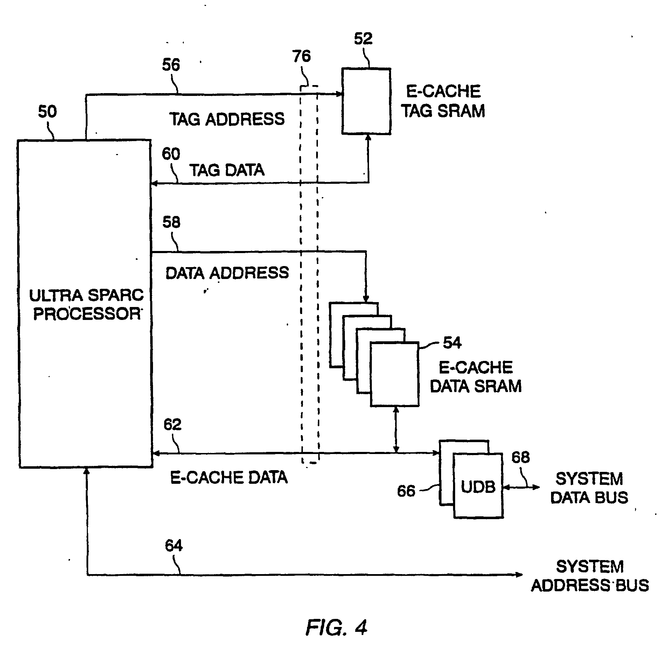

Fig. 4 is a block diagram of one L2 cache structure which the present invention could be applied to. A processor 50 is shown having an internal L1 cache. The L2 cache has two components, the L2 tag cache 52, and the L2 instruction (data) cache 54. A cache bus 76 has four components. Two separate address buses are used, a tag address bus 56, and a data address bus 58. The addressed information is provided back to the microprocessor (or written to the cache) on a tag data bus 60 and a cache data bus 62. Also shown in Fig. 4 is a system address bus 64 and an interface 66 to a system data bus 68.

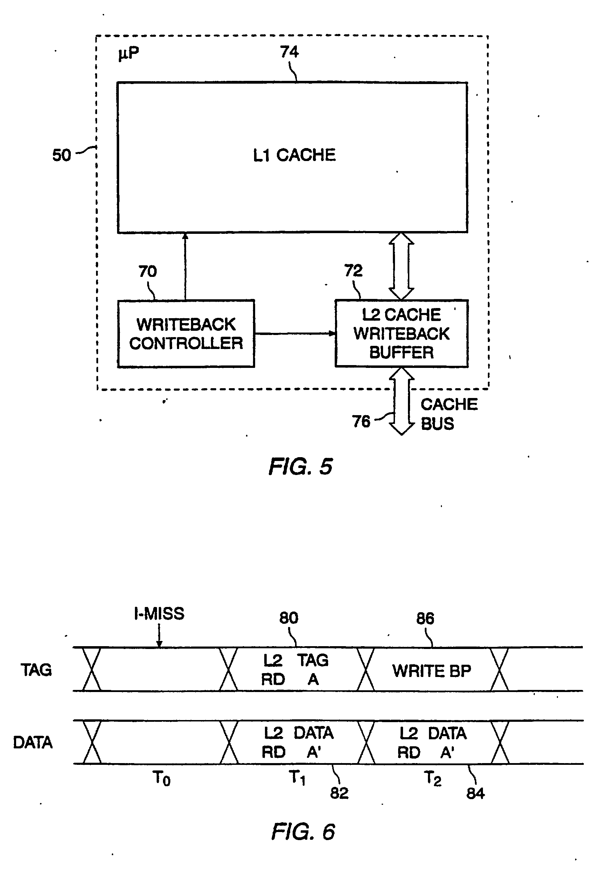

When a cache line in the microprocessor 50 is victimized, a writeback controller, such as writeback controller 70 of Fig. 5, is used to write the branch prediction information and other information associated with the cache line back into the next level cache, here the L2 tag cache 52. In one embodiment, the writeback data is stored in a writeback buffer 72, where it waits until there is an available bus cycle for writing this information from the L1 cache 74 into the L2 cache 52. The writeback is done over the cache bus 76, which includes buses 56, 58, 60 and 62 of Fig. 4.

The tag is much shorter than the actual data or instruction in the external, L2 cache. This can require one bus cycle to retrieve the tag, while two bus cycles are needed to retrieve the cache data (instructions). Thus, there is an available bus cycle which can be used to write back the branch prediction information for the cache tag being overwritten into the tag cache 52. This is illustrated in Fig. 6, which shows a first cycle at a time t0 showing an instruction miss, or simply a request to overwrite a line in the L1 cache. In a next cycle, labeled t1, an L2 tag address 80 is provided to tag address bus 56, and an L2 data address 82 is provided to data address bus 58. During the same cycle, the tag data on bus 60 and the half of a cache data entry on bus 62 are provided back to the microprocessor. Since the tag data is much shorter, the tag bus size equals the tag size, and the entire tag can be provided during the cycle. However, the longer cache data entry (the instructions themselves) means that the data bus size is a fraction of the cache block size, requiring a second cycle 84 during a time t2. Since the tag address and data buses 56 and 60 are not used during this period, they can be used to write the branch prediction information back to the L2 tag cache 52 during the cycle 86. In addition to writing back the branch prediction information, the next fetch address predicted, and the instruction class are also written back into the corresponding fields in the tag cache.

The present invention is particularly useful in providing reduced latency for multi-threading applications, including in particular lightweight processing which allow context switching without saving the full context (and thus normally causing a higher cache miss rate due to conflicts).

As will be understood by those with skill in the art, the present invention may be embodied in other specific forms. For example, the invention could be used to save the branch prediction information in a second level cache being victimized to a third level cache or to main memory. If the present invention is used with a non-inclusive L2 cache, the cache information can be stored if it happens to be in the L2 cache, and if not, can be discarded.

## Claims

1. A method for operating a computer system having multiple cache memories (L1 74; L2 52, 54), comprising the steps of:
storing branch prediction information (28, 30, 32) in a first cache memory (L1 74);
writing over an old cache entry with a new cache entry;
saving branch prediction information from said first cache (L1 74) corresponding to said old cache entry to a second cache memory (L2 52, 54);
and **characterised in that**:
said new cache entry is fetched using at least two cycles (T₁, T₂), a second cache tag address and a second cache data address being provided to a cache bus (56, 58) during a first cycle (T₁), with corresponding second cache tag (80) and a first portion (82) of second cache data being received (60, 62) in response to said addresses, a second portion (84) of second cache data being received during a second cycle (T₂), further comprising the step of:
writing said branch prediction information (86) corresponding to said old cache entry to said second cache tag memory (52) during said second cycle (T₂) using said cache bus (60).

2. The method of claim wherein said second cache memory is a lower level cache memory (L2 52, 54).

3. The method of claim 1 wherein said branch prediction information and said cache entries are stored in the same first cache.

4. The method of claim 1 wherein said first cache is integrated on a microprocessor chip, and said second cache is an external second level cache.

5. The method of claim 1 further comprising the steps of:
providing branch prediction valid bits (44) for said branch prediction information in said second cache; and
setting a branch prediction valid bit for said branch prediction information for said old cache entry to a valid state upon saving said branch prediction information to said second cache memory.

6. The method of claim 5 further comprising the step of:
overriding a default branch prediction setting if said branch prediction valid bit is set to a valid state for an entry.

## Patentansprüche

1. Verfahren zum Betrieb eines Computersystems mit mehreren Pufferspeichern (L1 74; L2 52, 54), umfassend die Schritte:
Speichern von Verzweigungs-Vorhersageinformation (28, 30, 32) in einem ersten Pufferspeicher (L 1 74);
Überschreiben eines alten Puffereintrages mit einem neuen Puffereintrag;
Sichern von Verzweigungs-Vorhersageinformation von dem ersten Puffer (L1 74) entsprechend dem alten Puffereintrag in einem zweiten Pufferspeicher (L2 52, 54);
und **dadurch gekennzeichnet, daß**:
der neue Puffereintrag abgerufen wird unter Verwendung von wenigstens zwei Zyklen (T1, T2), eine zweite Puffer-Hinweisadresse und eine zweite Puffer-Datenadresse einem Pufferbus (56, 58) während eines ersten Zyklus (T1) zugeführt wird, wobei der entsprechende zweite Puffer-Hinweis (80) und ein erster Teil (82) der zweiten Puffer-Daten aufgrund dieser Adressen empfangen wird (60, 62), und ein zweiter Teil (84) der zweiten Puffer-Daten während eines zweiten Zyklus (T2) empfangen wird, ferner umfassend den Schritt:
Einschreiben der Verzweigungs-Vorhersageinformation (86) entsprechend dem alten Puffereintrag in den zweiten Puffer-Hinweis-Speicher (52) während des zweiten Zyklus (T2) unter Benutzung des Pufferbusses (60).

2. Verfahren nach Anspruch 1, wobei der zweite Pufferspeicher ein Pufferspeicher (L2, 52, 54) eines niedrigeren Pegels ist.

3. Verfahren nach Anspruch 1, wobei die Verzweigungs-Vorhersageinformation und die Puffereinträge in dem gleichen ersten Puffer gespeichert sind

4. Verfahren nach Anspruch 1, wobei der erste Puffer auf einem Mikroprozessorchip integriert ist und der zweite Puffer ein externer Puffer des zweiten Pegels ist.

5. Verfahren nach Anspruch 1, ferner umfassend die Schritte:
Vorgabe eines Verzweigungs-Vorhersage-Gültigkeitsbits (44) für die Verzweigungs-Vorhersageinformation in dem zweiten Puffer; und
Setzen eines Verzweigungs-Vorhersage-Gültigkeitsbits für die Verzweigungs-Vorhersageinformation für den alten Puffereintrag auf einen Gültigkeitsstatus beim Sichern der Verzweigungs-Vorhersageinformation in dem zweiten Pufferspeicher.

6. Verfahren nach Anspruch 5, ferner umfassend den Schritt:
Übersteuerung einer Voreinstellungs-Verzweigungs-Vorhersageeinstellung, wenn das Verzweigungs-Vorhersage-Gültigkeitsbit auf einen Gültigkeitsstatus für einen Eintrag gesetzt ist.

## Revendications

1. Procédé pour faire fonctionner un système d'ordinateur comportant des antémémoires multiples (L1 74 ; L2 52, 54), comprenant les étapes consistant à :
stocker une information de prédiction de branchement (28, 30, 32) dans une première antémémoire (L1 74) ;
réécrire une entrée d'ancienne antémémoire par une entrée de nouvelle antémémoire;
sauvegarder une information de prédiction de branchement provenant de la première antémémoire (L1 74) correspondant à l'entrée d'ancienne antémémoire, dans une seconde antémémoire (L2 52, 54),
**caractérisé en ce qu'**
on va chercher l'entrée de nouvelle antémémoire en utilisant au moins deux cycles (T₁, T₂), une adresse d'étiquette de seconde antémémoire et une adresse de donnée de seconde antémémoire étant fournies à un bus d'antémémoire (56, 58) pendant un premier cycle (T₁), tandis qu'une étiquette de seconde antémémoire correspondante (80) et une première partie (82) d'une donnée de seconde antémémoire, sont reçues (60, 62) en réponse à ces adresses, une seconde partie (84) de donnée de seconde antémémoire étant reçue pendant un second cycle (T₂),
le procédé comprenant en outre l'étape consistant à :
écrire l'information de prédiction de branchement (86) correspondant à l'entrée d'ancienne antémémoire, dans la mémoire d'étiquettes de seconde antémémoire (52) pendant le second cycle (T₂) en utilisant le bus d'antémémoire (60).

2. Procédé selon la revendication 1,
dans lequel
la seconde antémémoire est une antémémoire de niveau inférieur (L2, 52, 54).

3. Procédé selon la revendication 1,
dans lequel
l'information de prédiction de branchement et les entrées d'antémémoire sont stockées dans la même première antémémoire.

4. Procédé selon la revendication 1,
dans lequel
la première antémémoire est intégrée sur une puce de microprocesseur, et la seconde antémémoire est une antémémoire de second niveau externe.

5. Procédé selon la revendication 1,
comprenant en outre les étapes consistant à :
- fournir des bits valides (44) de prédiction de branchement pour l'information de prédiction de branchement, dans la seconde antémémoire ; et
- régler un bit valide de prédiction de branchement destiné à l'information de prédiction de branchement pour l'entrée d'ancienne antémémoire, dans un état valide lorsqu'on sauvegarde l'information de prédiction de branchement dans la seconde antémémoire.

6. Procédé selon la revendication 5,
comprenant en outre l'étape consistant à :
- passer outre à un réglage de prédiction de branchement en défaut si le bit valide de prédiction de branchement est réglé dans un état valide pour une entrée.
